# EUROPÄISCHE PATENTSCHRIFT

(11) **EP 4 185 851 B1**
(45) Veröffentlichungstag und Bekanntmachung des Hinweises auf die Patenterteilung: **10.07.2024**
(21) Anmeldenummer: 21743194.9
(22) Anmeldetag: 15.07.2021
(51) Int. Cl.: G01M 3/20, G01M 3/22

(54) **VAKUUMLECKSUCHSYSTEM, GASSTEUEREINHEIT UND VERFAHREN ZUR GASLECKSUCHE**
VACUUM LEAK DETECTION SYSTEM, GAS CONTROL UNIT AND PROCEDURE FOR GAS LEAK DETECTION
SYSTÈME DE DÉTECTION DE FUITE À VIDE, UNITÉ DE COMMANDE DE GAZ ET PROCÉDURE DE DÉTECTION DE FUITE DE GAZ

(30) Priorität: 24.07.2020 DE 102020119600
(43) Veröffentlichungstag der Anmeldung: 31.05.2023
(73) Patentinhaber: Inficon GmbH, 50968 Köln (DE)
(72) Erfinder: WETZIG, Daniel, 50968 Köln (DE); REISMANN, Maximilian, 50968 Köln (DE); GRENZ, Josef, 50968 Köln (DE); VAN TRIEST, Hendrik, 50968 Köln (DE)
(74) Vertreter: dompatent von Kreisler Selting Werner - Partnerschaft von Patent- und Rechtsanwälten mbB
(86) Internationale Anmeldenummer: PCT/EP2021/069759
(87) Internationale Veröffentlichungsnummer: WO 2022/017907

(56) Entgegenhaltungen:
- CN-A- 109 323 812
- DE-A1- 4 335 894
- US-A1- 2018 188 130

## Beschreibung

Die Erfindung betrifft ein Vakuumlecksuchsystem, eine Gassteuereinheit und ein Verfahren zur Gaslecksuche.

Klassische Helium-Vakuumlecksuchgeräte, wie z.B. der UL3000 von INFICON, weisen eine Vakuumsteuereinheit mit integriertem Helium-Messgerät in Form eines Massenspektrometers auf. Das Gerät beinhaltet eine Vakuumpumpe zum Anschluss an die Prüfkammer oder den Prüfling über eine separate Vakuumleitung. Dabei bilden die Vakuumsteuereinheit, das Helium-Massenspektrometer und die Vakuumpumpe eine Einheit innerhalb eines gemeinsamen Gehäuses.

Bei einem anderen Helium-Vakuumlecksuchgerät, dem LDS3000 von INFICON, bilden ein Sektorfeld-Massenspektrometer und eine Turbomolekularpumpe mit angeflanschtem Ventilblock eine Helium-Detektoreinheit, die in Prüfanlagen integriert wird. Die Prüfanlagen weisen eine Prüfkammer, einen Pumpenstand und den Vakuumlecksucher auf. Die Helium-Detektoreinheit ist mit der Vakuum-Testkammer und mit dem Pumpstand jeweils über eine Verbindungsleitung gasleitend

Für die Erfindung relevante Dokumente des Standes der Technik sind die Patentdokumente DE 43 35 894 A1, US 2018/188130 A1 und CN 109 323 812 A.

Keine davon offenbart eine Gassteuereinheit, die dazu konfiguriert ist, den Einlass und Auslass der Prüfkammer mit dem Einlass und Auslass der Gasdetektionseinheit strömungstechnisch zu verbinden. Darüber hinaus stellt die Gassteuereinheit keine selektive Fluidverbindung zwischen der Gasdetektionseinheit und der Prüfkammer her.

Der Erfindung liegt die Aufgabe zugrunde, ein Prüfgas-Vakuumlecksuchsystem zu schaffen, mit dem eine flexible und steuerbare Zufuhr von Prüfgas aus der Prüfkammer zu dem Gasdetektor ermöglicht wird.

Die erfindungsgemäße Gassteuereinheit ist definiert durch die Merkmale des unabhängigen Patentanspruchs 1.

Demnach enthält das Vakuumlecksuchsystem drei Komponenten, bei denen es sich um eine Prüfkammereinheit mit einem Prüfkammer-Gaseinlass und mit einem Prüfkammer-Gasauslass, eine Gasdetektionseinheit mit einem Gasdetektions-Gaseinlass und einem Gasdetektions-Gasauslass und eine die Gaseinlässe und die Gasauslässe der Gasdetektionseinheit und der Prüfkammereinheit verbindende Gassteuereinheit handelt, die mit der Prüfkammereinheit und mit der Gasdetektionseinheit verbunden ist. Die Gassteuereinheit weist separate Gasleitungswege zum wahlweisen Verbinden des Prüfkammer-Gasauslasses mit dem Gasdetektions-Gaseinlass und dem Gasdetektions-Gasauslass auf.

Die erfindungsgemäße Gassteuereinheit ist mit der Prüfkammereinheit und der Gasdetektionseinheit eines Vakuumlecksuchsystems verbindbar und weist separate Gasleitungswege zum wahlweisen Verbinden der Gaseinlässe und der Gasauslässe der Prüfkammereinheit und der Gasdetektionseinheit auf.

Insbesondere ist ein separater Gaseinlass der Gassteuereinheit dafür vorgesehen, durch einen durch die Gassteuereinheit hindurch verlaufenden Gasleitungsweg mit dem Prüfkammer-Gaseinlass verbunden zu werden, um der Prüfkammereinheit ein Trägergas zuzuführen, das über den separaten Gaseinlass der Gassteuereinheit angesaugt wird. Hierzu kann eine in der Gassteuereinheit vorhandene Vakuumpumpe genutzt werden. Insbesondere ist die Gassteuereinheit dazu ausgebildet, die Trägergaszufuhr zu der Prüfkammereinheit zu steuern. Das bedeutet, dass die Trägergaszufuhr von der Gassteuereinheit geöffnet und/oder geschlossen werden kann und/oder dass die Menge an Trägergas verändert werden kann. Hierzu kann beispielsweise eine Flussdrossel mit veränderbarem Durchlass und/oder ein separat steuerbares Ventil vorgesehen sein.

Eine Variante der Erfindung kann darin bestehen, dass die Prüfkammereinheit, die Gasdetektionseinheit und die Gassteuereinheit als separate, lösbar miteinander verbindbare Module ausgebildet sind. Die drei Module sind direkt miteinander koppelbar, ohne dass separate Vakuumleitungen zum Verbinden der Module erforderlich sind. Damit kann aus den drei Modulen eine gemeinsame Vakuumlecksucheinheit gebildet werden, die beispielsweise auch in einem gemeinsamen Gehäuse angeordnet ist. Die Prüfkammereinheit, die Gassteuereinheit und/oder die Gasdetektionseinheit können selektiv gegen andere Module ausgetauscht werden, um das Vakuumlecksuchsystem an individuelle Testbedingungen anpassen zu können.

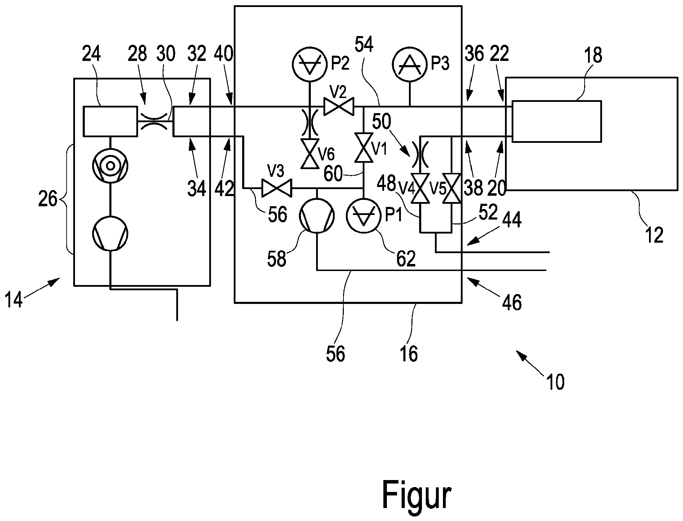

Im Folgenden wird anhand der Figur ein Ausführungsbeispiel der Erfindung näher erläutert. Die Figur zeigt das Ausführungsbeispiel in Form eines schematischen Blockschaltbilds.

Die Figur zeigt das Vakuumlecksuchsystem 10 mit der Prüfkammereinheit 12, der Gasdetektionseinheit 14 und der Gassteuereinheit 16.

Die Prüfkammereinheit 12 beinhaltet die Vakuumprüfkammer 18, bei der es sich um eine starre Prüfkammer oder auch um eine flexible Prüfkammer, beispielsweise in Form einer Folienkammer, handeln kann. Die Prüfkammereinheit 12 weist einen Prüfkammer-Gaseinlass 20 und einen Prüfkammer-Gasauslass 22 auf, die beide gasleitend mit der Prüfkammer 18 verbunden sind.

Die Gasdetektionseinheit 14 beinhaltet den Gasdetektor 24, bei dem es sich im vorliegenden Ausführungsbeispiel um ein Quadrupol-Massenspektrometer 24 handelt, das über eine zweistufige Vakuumpumpe 26 zur Atmosphäre hin evakuiert wird. Der Gasdetektor 24 ist über einen mit einer Drossel 28 versehenen Detektions-Gasleitungsweg 30 mit einem Gasdetektions-Einlass 32 und einem Gasdetektions-Gasauslass 34 gasleitend verbunden.

Die Gassteuereinheit 16 ist mit drei Gaseinlässen 36, 42, 44 und drei Gasauslässen 38, 40, 46 versehen. Der erste Gaseinlass 36 ist durch eine lösbare Verbindung an den Prüfkammer-Gasauslass 22 gasleitend angeschlossen. Entsprechend ist der erste Gasauslass 38 mit dem Prüfkammer-Gaseinlass 20 verbunden. Entsprechend ist der zweite Gasauslass 40 mit dem Gasdetektions-Einlass 32 verbunden und der zweite Gaseinlass 42 mit dem Gasdetektions-Auslass 34 verbunden. Der dritte Gaseinlass 44 und der dritte Gasauslass 46 sind jeweils zur Atmosphäre hin offen.

Der dritte Gaseinlass 44 ist über einen Trägergasleitungsweg 48 gasleitend mit dem ersten Gasauslass 38 verbunden. Der Trägergasleitungsweg 48 weist ein selektiv steuerbares Ventil V4 und eine Flussdrossel 50 auf, die einen Gasfluss von z.B. 10 sccm bewirkt. Es ist möglich, dass der Fluss mithilfe der Flussdrossel an das Prüfkammervolumen 18 angepasst wird. Typischerweise werden Trägergasströme von 10 sccm bis 100sccm gewählt, je nach Größe des Prüfkammervolumens 18. Selektiv steuerbar bedeutet vorliegend, dass das jeweilige Ventil wahlweise geöffnet oder geschlossen werden kann. Hierzu beinhaltet die Gassteuereinheit 16 eine in der Figur nicht dargestellte Elektronik. Der Trägergasweg 48 wird über einen Bypass-Weg 52 überbrückt, der ebenfalls den dritten Gaseinlass 44 mit dem ersten Gasauslass 38 gasleitend verbindet und ein dem Ventil V4 und der Drossel 50 parallel geschaltetes selektiv steuerbares Ventil V5 aufweist.

Der erste Einlass 36 ist über einen Prüfgasleitungsweg 54, der ein selektiv steuerbares Ventil V2 beinhaltet, mit dem zweiten Gasauslass 40 gasleitend verbunden. An den Prüfgasleitungsweg 54 sind Druckmessgeräte P2 und P3 angeschlossen, um den Druck in Gasströmungsrichtung hinter dem Ventil V2 mit dem Druckmessgerät P2 und in Gasströmungsrichtung vor dem Ventil V2 mit dem Druckmessgerät P3 zu messen.

Der zweite Gaseinlass 42 ist über einen Rückführungs-Gasleitungsweg 56, der ein selektiv steuerbares Ventil V3 und eine Vakuumpumpe 58 beinhaltet, mit dem dritten Gasauslass 46 gasleitend verbunden. Ein Evakuierungs-Gasleitungsweg 60, der ein selektiv steuerbares Ventil V1 beinhaltet, verbindet den Prüfgasleitungsweg 54 in Gasströmungsrichtung vor dem Ventil V2 mit dem Rückführungs-Gasleitungsweg 56 zwischen dem Ventil V3 und der Vakuumpumpe 58. An den Evakuierungs-Gasleitungsweg 60 ist in Gasströmungsrichtung hinter dem Ventil V1 eine Druckmessvorrichtung P1 gemäß dem Bezugszeichen 62 angeschlossen.

Die Messsignale der Druckmessgeräte P1, P2 und P3 werden an eine in der Figur nicht dargestellte Steuerelektronik der Gassteuereinheit 16 übertragen. Die Steuerelektronik steuert in Abhängigkeit von den gemessenen Druckwerten und möglichen weiteren Steuerparametern die Öffnungs- und Schließzustände der Ventile V1, V2, V3, V4, V5 und V6 und den Betriebszustand der Vakuumpumpe 58.

Zunächst ist das Ventil V1 geöffnet und zumindest die Ventile V2 und V3, gegebenenfalls auch die Ventile V4, V5 und/oder V6, geschlossen, wobei die Vakuumpumpe 58 läuft und die Prüfkammer 18 evakuiert. Das Gas aus der Prüfkammer 18 wird über den Prüfgasleitungsweg 54, den Evakuierungs-Gasleitungsweg 60 und den Rückführungs-Gasleitungsweg 56 hin zum dritten Gasauslass 46 in die Atmosphäre evakuiert. Parallel dazu evakuiert die Vakuumpumpe 26 den Gasdetektor 24.

Bei Erreichen eines geeigneten Druckschwellenwerts an den Druckmessvorrichtungen P3 und/oder P1 werden die Ventile V2 und V3 geöffnet und das Ventil V1 geschlossen. Gegebenenfalls wird auch das Ventil V4 geöffnet. Das Ventil V5 ist zunächst geschlossen. Die Vakuumpumpe 58 fördert in diesem Betriebszustand Gas aus der Prüfkammer 18 über den Prüfgasleitungsweg 54 durch das geöffnete Ventil V2 in den Gasdetektions-Einlass 32, von wo das Gas über die Flussdrossel 28 in das Massenspektrometer des Gasdetektors 24 gelangt, und über den Gasdetektions-Auslass 34 und den zweiten Gaseinlass 42, den Rückführungs-Gasleitungsweg 56 und das geöffnete Ventil V3 zum dritten Gasauslass 46 und von dort in die Atmosphäre. Über den dritten Gaseinlass 44 strömt durch das geöffnete Ventil V4 über den Trägergasleitungsweg 48 und durch die Flussdrossel 50 ein geeigneter Trägergasstrom in die Prüfkammer 18 nach. Das Trägergas wird dabei der die Gassteuereinheit 16 umgebenden Atmosphäre entnommen. Alternativ ist denkbar, dass an den dritten Gaseinlass 44 eine Trägergasquelle angeschlossen wird.

Nach Abschluss der Gaslecksuche kann über den Bypass-Gasleitungsweg 52 die Flussdrossel 50 überbrückt und eine entsprechend große Gasmenge aus dem dritten Gaseinlass angesaugt werden, um die Prüfkammer 18, die Ventile und die Gasleitungswege zu spülen. Hierzu kann auch eine geeignete Spülgasquelle an den dritten Gaseinlass 44 angeschlossen werden. Das Spülen der Messkammer 18, z.B. zum Abbau von Verseuchungen nach der Messung sehr großer Leckageraten, erfolgt über den Pfad, der über die Leitungsabschnitte 52, das Ventil V5, die Prüfkammer 18, den Prüfgasleitungsweg 54 und dann direkt über das geöffnete Ventil V1 und den Evakuierungs-Gasleitungsweg 60 zur Pumpe 58 führt. Der Einlassbereich zum Flussteiler 28 zum Gasnachweis ist während dieser Spülphase über die geschlossenen Ventile V2 und V3 abgetrennt. Das Spülen der Leitungen 56 und des Teilstücks zwischen den Ventilen V2 und V3 erfolgt über den gedrosselten Spülgaseinlass über das Ventil V6. Während dieser Phase sind die Ventile V2 und V1 geschlossen. Das Spülgas wird über die Ventile V6 und V3 zur Pumpe 58 geleitet.

Die Gasleitungswege 48, 52, 54, 56 und 60 sowie die entsprechenden Ventile V1-V6, die Drosseln und die Druckmessvorrichtungen P1-P3 sind in einem gemeinsamen, einstückigen und in der Gassteuereinheit 16 angeordneten Ventilblock angeordnet, bei dem es sich um ein massives Element handelt. Die Druckmessgeräte können an geeignete Anschlüsse des Ventilblocks angeschlossen sein, ebenso auch die Vakuumpumpe 58. Die Ventile V1-V6 können außen auf dem Ventilblock in bekannter Weise angeordnet und an entsprechende Anschlüsse der jeweiligen Gasleitungswege angeschlossen sein.

Gegenüber herkömmlichen Vakuumlecksuchsystemen bietet die Erfindung den entscheidenden Vorteil, dass die Gasführung zur Evakuierung der Prüfkammer, während der Gaslecksuche und zur anschließenden Spülung der Gasleitungswege und der Prüfkammer über nur ein Element, nämlich die Gassteuereinheit 16, gesteuert werden kann, ohne dass separate Komponenten über separate Schlauchleitungen an die Prüfkammer und/oder den Gasdetektor anzuschließen wären. Auch die Trägergaszufuhr und die Spülgaszufuhr erfolgen nicht über separate Schlauchleitungen in die Prüfkammer 18, sondern direkt in die Gassteuereinheit 16. Die Prüfkammer 18 weist dabei nur zwei Anschlüsse auf. Ein separater Anschluss zur Trägergaszufuhr und/oder zur Zufuhr von Spülgas sind nicht erforderlich. Entsprechend benötigt auch die Gasdetektionseinheit 14 nur zwei Anschlüsse 32, 34 sowie den Auslass zur Evakuierung des Massenspektrometers 24, ohne dass separate Anschlüsse für Pumpen, Ventile, Druckmessgeräte usw. erforderlich wären.

## Patentansprüche

1. Gassteuereinheit (16) für ein Vakuumlecksuchsystem (10), das Vakuumlecksuchsystem aufweisend
eine Prüfkammereinheit (12) mit einer Vakuumprüfkammer (18), einem mit der Vakuumprüfkammer (18) verbundenen Prüfkammer-Gaseinlass (20) und einem mit der Vakuumprüfkammer (18) verbundenen Prüfkammer-Gasauslass (22) und
eine Gasdetektionseinheit (14) mit einem Gasdetektions-Einlass (32) und einem Gasdetektions-Gasauslass (34),
wobei die Gassteuereinheit (16)
dazu ausgebildet ist, den Prüfkammer-Gaseinlass (20) und den Prüfkammer-Gasauslass (22) mit dem Gasdetektions-Gaseinlass (32) und dem Gasdetektions-Gasauslass (34) zu verbinden und hierzu mit der Prüfkammereinheit (12) und mit der Gasdetektionseinheit (14) verbindbar ist und separate Gasleitungswege (48, 52, 54, 56, 60) zum wahlweisen Verbinden der Gaseinlässe (20, 40) und der Gasauslässe (22, 34) der Prüfkammereinheit (12) und der Gasdetektionseinheit (14) aufweist, und
einen zur Atmosphäre hin offenen dritten Gaseinlass (44) aufweist, der durch einen durch die Gassteuereinheit (16) hindurch verlaufenden Gasleitungsweg (48) mit dem Prüfkammer-Gaseinlass (20) verbindbar ist, um der Prüfkammereinheit (12) Trägergas zuzuführen, welches über den dritten Gaseinlass (44) angesaugt wird.

2. Gassteuereinheit (16) nach Anspruch 1, **dadurch gekennzeichnet, dass** die Gassteuereinheit eine mit dem Prüfkammer-Gasauslass (22) verbindbare Vakuumpumpe (58) zum Evakuieren der Prüfkammereinheit (12) aufweist.

3. Gassteuereinheit (16) nach einem der vorhergehenden Ansprüche, **dadurch gekennzeichnet, dass** das Vakuumlecksuchsystem (10) modular aus der Prüfkammereinheit (12), der Gasdetektionseinheit (14) und der Gassteuereinheit (16) als separaten, lösbar miteinander verbindbaren Modulen gebildet wird.

4. Gassteuereinheit (16) nach einem der vorhergehenden Ansprüche, **dadurch gekennzeichnet, dass** die Gassteuereinheit (16) einen mit dem Prüfkammer-Gasauslass (22) verbindbaren ersten Gaseinlass (36), einen mit dem Prüfkammer-Gaseinlass (20) verbindbaren ersten Gasauslass (38), einen mit dem Gasdetektions-Gaseinlass (32) verbindbaren zweiten Gasauslass (40) und einen mit dem Gasdetektions-Gasauslass (34) verbindbaren zweiten Gaseinlass (42) aufweist, wobei der erste Gaseinlass (36) mit dem zweiten Gasauslass (40) durch einen durch die Gassteuereinheit (16) hindurch verlaufenden Gasleitungsweg (54) verbunden ist.

5. Gassteuereinheit (16) nach einem der vorhergehenden Ansprüche, **dadurch gekennzeichnet, dass** der erste Gasauslass (38) und der zweite Gaseinlass (42) nicht durch einen durch das Gassteuermodul (16) hindurch verlaufenden Gasleitungsweg miteinander verbunden sind.

6. Gassteuereinheit (16) nach einem der beiden vorhergehenden Ansprüche, **dadurch gekennzeichnet, dass** die Gassteuereinheit (16) einen zur Atmosphäre hin offenen dritten Gasauslass (46) aufweist, wobei der dritte Gaseinlass (44) durch einen durch die Gassteuereinheit (16) hindurch verlaufenden Gasleitungsweg (48, 52) mit dem ersten Gasauslass (38) und der dritte Gasauslass (46) über einen durch die Gassteuereinheit (16) hindurch verlaufenden Gasleitungsweg (56) mit dem zweiten Gaseinlass (42) verbunden sind.

7. Gassteuereinheit (16) nach dem vorhergehenden Anspruch, **dadurch gekennzeichnet, dass** der den zweiten Gaseinlass (42) mit dem dritten Gasauslass (46) verbindende Gasleitungsweg (56) ein separat steuerbares Ventil (V3) und eine Vakuumpumpe (58) aufweist und über einen ein ebenfalls separat steuerbares Ventil (V1) aufweisenden gasleitenden Verbindungszweig (60) mit dem den ersten Gaseinlass (36) mit dem zweiten Gasauslass (40) verbindenden Gasleitungsweg (54) verbunden ist.

8. Gassteuereinheit (16) nach einem der vorhergehenden Ansprüche, **dadurch gekennzeichnet, dass** der den ersten Gaseinlass (36) mit dem zweiten Gasauslass (40) verbindende Gasleitungsweg (54) ein separat steuerbares Ventil (V2) aufweist.

9. Gassteuereinheit (16) nach einem der vorhergehenden Ansprüche, **dadurch gekennzeichnet, dass** der den dritten Gaseinlass (44) mit dem ersten Gasauslass (38) verbindende Gasleitungsweg (50) ein separat steuerbares Ventil (V4) und eine hierzu in Reihe geschaltete Flussdrossel (50) aufweist und einen das Ventil (V4) und die Flussdrossel (50) überbrückenden Bypasszweig (52) mit einem ebenfalls separat steuerbaren Ventil (V5) aufweist.

10. Gassteuereinheit (16) nach einem der vorhergehenden Ansprüche, **dadurch gekennzeichnet, dass** die Gasleitungswege (48, 52, 54, 56, 60) der Gassteuereinheit (16) in einem gemeinsamen Ventilblock angeordnet sind.

11. Gassteuereinheit (16) nach einem der vorhergehenden Ansprüche, **dadurch gekennzeichnet, dass** die Prüfkammereinheit (12) eine als Prüfkammer (18) ausgebildete Vakuumkammer in Form einer starren Prüfkammer oder in Form einer flexiblen Folienkammer aufweist.

12. Gassteuereinheit (16) nach einem der vorhergehenden Ansprüche, **dadurch gekennzeichnet, dass** ein mit der Gassteuereinheit (16) verbindbares Hilfspumpenmodul vorgesehen ist, um die Pumpleistung der Gassteuereinheit (16) zu erhöhen.

13. Vakuumlecksuchsystem (10) aufweisend:
eine Gassteuereinheit (16) nach einem der vorhergehenden Ansprüche, eine Prüfkammereinheit (12) mit einer Vakuumprüfkammer (18), und eine Gasdetektionseinheit (14), (10),
wobei die Vakuumprüfkammer (18) einen verbundenen Prüfkammer-Gaseinlass (20) und einen verbundenen Prüfkammer-Gasauslass (22) umfasst, wobei
die Gasdetektionseinheit (14) einen Gasdetektions-Einlass (32) und einen Gasdetektions-Gasauslass (34) umfasst, und
wobei die Gassteuereinheit (16) mit der Prüfkammereinheit (12) und mit der Gasdetektionseinheit (14) verbunden ist.

14. Verfahren zur Gaslecksuche mit einer Gassteuereinheit (16) nach einem der Ansprüche 1 bis 12, mit den folgenden Schritten:
• Evakuieren der Prüfkammer (18) der Prüfkammereinheit (12) mit der Vakuumpumpe (58) der Gassteuereinheit (16) über einen den ersten Gaseinlass (36) mit der Vakuumpumpe (58) und die Vakuumpumpe (58) mit dem dritten Gasauslass (46) verbindenden Gasleitungsweg (54, 60, 56),
• Sperren des den ersten Einlass (36) mit der Vakuumpumpe (58) verbindenden Verbindungszweigs (60) und Öffnen des den ersten Gaseinlass (36) mit dem zweiten Gasauslass (40) verbindenden Gasleitungswegs (54) und des den zweiten Gaseinlass (42) mit der Vakuumpumpe (58) verbindenden Gasleitungswegs (56), während ein den dritten Gaseinlass (44) mit dem ersten Gasauslass (38) verbindender Gasleitungsweg (48) ebenfalls geöffnet ist, um der Prüfkammer (18) über den dritten Gaseinlass (44) ein Trägergas zuzuführen und das Gemisch aus Trägergas und möglichem Leckagegas der Gasdetektionseinheit (14) zuzuführen.

15. Verfahren nach dem vorhergehenden Anspruch, **gekennzeichnet durch** den weiteren Schritt:
• Spülen der Prüfkammereinheit (12) und/oder der Gasdetektionseinheit (14) mit über den dritten Gaseinlass (44) angesaugtem Gas aus der die Gassteuereinheit (16) umgebenden Atmosphäre.

16. Verfahren nach Anspruch 14 oder 15, **dadurch gekennzeichnet, dass** der den ersten Einlass (36) mit dem zweiten Auslass (40) verbindende Gasleitungsweg (54) und der den zweiten Einlass (42) mit dem dritten Gasauslass (46) verbindende Gasleitungsweg (56) jeweils geschlossen sind während die Prüfkammer (18) mit der Vakuumpumpe (58) der Gassteuereinheit (16) evakuiert wird.

## Claims

1. Gas control unit (16) for a vacuum leak system (10), the vacuum leak detection system (10) comprising a test chamber unit (12) having a vacuum test chamber (18), a test chamber gas inlet (20) connected to the vacuum test chamber (18) and a test chamber gas outlet (22) connected to the vacuum test chamber (18), and a gas detection unit (14) having a gas detection gas inlet (32) and a gas detection gas outlet (34), the gas control unit (16) being adapted to connect the test chamber gas inlet (20) and the test chamber gas outlet (22) to the gas detection gas inlet (32) and the gas detection gas outlet (34) and having separate gas conduction paths (48, 52, 54, 56, 60) for selectively connecting the gas inlets (20, 40) and the gas outlets (22, 34) of the test chamber unit (12) and of the gas detection unit (14), and comprising a third gas inlet (44) which is adapted to be connected to the test chamber gas inlet (20) via a gas conduction path (48) running through the gas control unit (16), in order to supply carrier gas to the test chamber unit (12) which is drawn in via the third gas inlet (44).

2. Gas control unit (16) according to claim 1, **characterized in that** the gas control unit comprises a vacuum pump (58) for evacuating the test chamber unit (12), said pump being connectable to the test chamber gas outlet (22).

3. Gas control unit (16) according to one of the preceding claims, **characterized in that** the vacuum leak detection system (10) is formed modularly by the test chamber unit (12), the gas detection unit (14) and the gas control unit (16) as separate modules adapted to be detachably connected to each other.

4. Gas control unit (16) according to one of the preceding claims, **characterized in that** the gas control unit (16) comprises a first gas inlet (36) connectable to the test chamber gas outlet (22), a first gas outlet (38) connectable to the test chamber gas inlet (20), a second gas outlet (40) connectable to the gas detection gas inlet (32), and a second gas inlet (42) connectable to the gas detection gas outlet (34), the first gas inlet (36) being connected to the second gas outlet (40) via a gas conduction path (54) extending through the gas control unit (16).

5. Gas control unit (16) according to one of the preceding claims, **characterized in that** the first gas outlet (38) and the second gas inlet (42) are not connected to each other via a gas conduction path extending through the gas control module (16).

6. Gas control unit (16) according to one of the two preceding claims, **characterized in that** the gas control unit (16) has a third gas outlet (46) open to the atmosphere, the third gas inlet (44) being connected to the first gas outlet (38) via a gas conduction path (48, 52) extending through the gas control unit (16), and the third gas outlet (46) being connected the second gas inlet (42) via a gas conduction path (56) extending through the gas control unit (16).

7. Gas control unit (16) according to the preceding claim, **characterized in that** the gas conduction path (56) connecting the second gas inlet (42) to the third gas outlet (46) comprises a separately controllable valve (V3) and a vacuum pump (58) and is connected to the gas conduction path (54), which connects the first gas inlet (36) to the second gas outlet (40), via a gas-conducting connection branch (60) comprising a valve (V1) that also is separately controllable.

8. Gas control unit (16) according to one of the preceding claims, **characterized in that** the gas conduction path (54) connecting the first gas inlet (36) to the second gas outlet (40) comprises a separately controllable valve (V2).

9. Gas control unit (16) according to one of the preceding claims, **characterized in that** the gas conduction path (50) connecting the third gas inlet (44) to the first gas outlet (38) comprises a separately controllable valve (V4) and a flow throttle (50) connected in parallel thereto and a bypass branch (52) bypassing the valve (V4) and the flow throttle (50) and comprising a valve (V5) that also is separately controllable.

10. Gas control unit (16) according to one of the preceding claims, **characterized in that** the gas conduction paths (48, 52, 54, 56, 60) of the gas control unit (16) are arranged in a common valve block.

11. Gas control unit (16) according to one of the preceding claims, **characterized in that** the test chamber unit (12) comprises a vacuum chamber designed as a test chamber (18) in the form of a rigid test chamber or in the form of a flexible film chamber.

12. Gas control unit (16) according to one of the preceding claims, **characterized in that** an auxiliary pump module connectable to the gas control unit (16) is provided in order to increase the pumping capacity of the gas control unit (16).

13. Vacuum leak detection system (10) comprising:
a gas control unit (16) according to one of the preceding claims, a test chamber unit (18) having a vacuum test chamber (18), and a gas detection unit (14), the vacuum test chamber (18) comprising a connected test chamber gas inlet (20) and a connected test chamber gas outlet (22), the gas detection unit (14) having a gas detection gas inlet (32) and a gas detection gas outlet (34), and the gas control unit (16) being connected to the test chamber unit (12) and to the gas detection unit (14).

14. Method for gas leak detection with a gas control unit (16) according to one of claims 1-12, the method comprising the steps of:
• evacuating the test chamber (18) of the test chamber unit (12) using the vacuum pump (58) of the gas control unit (16) via a gas conduction path (54, 60, 56) connecting the first gas inlet (36) to the vacuum pump (58) and the vacuum pump (58) to the third gas outlet (46),
• blocking the connection branch (60) connecting the first inlet (36) to the vacuum pump (58) and opening the gas conduction path (54) connecting the first gas inlet (36) to the second gas outlet (40) and opening the gas conduction path (56) connecting the second gas inlet (42) to the vacuum pump (58), while a gas conduction path (48) connecting the third gas inlet (44) to the first gas outlet (38) is also open in order to supply a carrier gas to the test chamber (18) via the third gas inlet (44) and to supply the mixture of carrier gas and possible leakage gas to the gas detection unit (14).

15. The method according to the preceding claim, **characterized by** the further step of:
• flushing the test chamber unit (12) and/or the gas detection unit (14) with gas drawn from the atmosphere surrounding the gas control unit (16) via the third gas inlet (44).

16. The method according to claim 14 or 15, **characterized in that** the gas conduction path (54) connecting the first inlet (36) to the second outlet (40) and the gas conduction path (56) connecting the second inlet (42) to the third gas outlet (46) are each closed while the test chamber (18) is evacuated using the vacuum pump (58) of the gas control unit (16).

## Revendications

1. Unité de commande de gaz (16) pour un système de détection de fuite à vide (10), le système de détection de fuite à vide comprenant
une unité de chambre de détection (12) avec une chambre de détection de vide (18), une entrée de gaz de chambre de détection (20) reliée à la chambre de détection de vide (18) et une sortie de gaz de chambre de détection (22) reliée à la chambre de détection de vide (18), et
une unité de détection de gaz (14) avec une entrée de détection de gaz (32) et une sortie de gaz de détection de gaz (34),
l'unité de commande de gaz (16) étant configurée pour relier l'entrée de gaz de chambre de détection (20) et la sortie de gaz de chambre de détection (22) à l'entrée de gaz de détection de gaz (32) et la sortie de gaz de détection de gaz (34) et pouvant être reliée, à cet effet, à l'unité de chambre de détection (12) et l'unité de détection de gaz (14) et comprenant des chemins de conduction de gaz (48, 52, 54, 56, 60) séparés pour un raccordement sélectif des entrées de gaz (20, 40) et des sorties de gaz (22, 34) de l'unité de chambre de détection (12) et de l'unité de détection de gaz (14), et comprenant une troisième entrée de gaz (44) ouverte vers l'atmosphère qui peut être reliée à l'entrée de gaz de chambre de détection (20) par un chemin de conduction de gaz (48) passant par l'unité de commande de gaz (16), afin d'acheminer du gaz porteur à l'unité de chambre de détection (12), qui a été aspiré à travers la troisième entrée de gaz (44).

2. Unité de commande de gaz (16) selon la revendication 1, **caractérisée en ce que** l'unité de commande de gaz comprend une pompe à vide (58) pouvant être reliée à la sortie de gaz de chambre de détection (22), pour l'évacuation de l'unité de chambre de détection (12).

3. Unité de commande de gaz (16) selon l'une des revendications précédentes, **caractérisée en ce que** le système de détection de fuite à vide (10) est formé de manière modulaire à partir de l'unité de chambre de détection (12), de l'unité de détection de gaz (14) et de l'unité de commande de gaz (16) comme modules séparés, reliés les uns aux autres et pouvant être détachés.

4. Unité de commande de gaz (16) selon l'une des revendications précédentes, **caractérisée en ce que** l'unité de commande de gaz (16) comprend une première entrée de gaz (36) pouvant être reliée à la sortie de gaz de chambre de détection (22), une première sortie de gaz (38) pouvant être reliée à l'entrée de gaz de chambre de détection (20), une deuxième entrée de gaz (40) pouvant être reliée à l'entrée de détection de gaz (32) et une deuxième entrée de gaz (42) pouvant être reliée à la sortie de gaz de détection de gaz (34), la première entrée de gaz (36) étant reliée à la deuxième sortie de gaz (40) par un conduit de gaz (54) traversant l'unité de commande de gaz (16).

5. Unité de commande de gaz (16) selon l'une des revendications précédentes, **caractérisée en ce que** la première sortie de gaz (38) et la deuxième entrée de gaz (42) ne sont pas reliées entre elles par un conduit de gaz traversant le module de commande de gaz (16).

6. Unité de commande de gaz (16) selon l'une des deux revendications précédentes, **caractérisée en ce que** l'unité de commande de gaz (16) comprend une troisième sortie de gaz (46) ouverte vers l'atmosphère, la troisième entrée de gaz (44) étant reliée à la première sortie de gaz (38) par un conduit de gaz (48, 52) traversant l'unité de commande de gaz (16) et la troisième sortie de gaz (46) étant reliée à la deuxième entrée de gaz (42) par un conduit de gaz (56) traversant l'unité de commande de gaz (16).

7. Unité de commande de gaz (16) selon la revendication précédente, **caractérisée en ce que** le conduit de gaz (56) reliant la deuxième entrée de gaz (42) à la troisième sortie de gaz (46), comprend une soupape (V3) pouvant être commandée séparément et une pompe à vide (58) et est relié par une branche de liaison (60) conduisant le gaz et comprenant une soupape (V1) pouvant également être commandée séparément, au conduit de gaz (54) reliant la première entrée de gaz (36) à la deuxième sortie de gaz (40).

8. Unité de commande de gaz (16) selon l'une des revendications précédentes, **caractérisée en ce que** le conduit de gaz (54) reliant la première entrée de gaz (36) à la deuxième sortie de gaz (40) comprend une soupape (V2) pouvant être commandée séparément.

9. Unité de commande de gaz (16) selon l'une des revendications précédentes, **caractérisée en ce que** le conduit de gaz (50) reliant la troisième entrée de gaz (44) à la première sortie de gaz (38) comprend une soupape (V4) pouvant être commandée séparément et en plus un frein de flux (50) monté en série et comprend une branche bypass (52) reliant la soupape (V4) et le frein de flux (50) à une soupape (V5) pouvant également être commandée séparément.

10. Unité de commande de gaz (16) selon l'une des revendications précédentes, **caractérisée en ce que** les conduits de gaz (48, 52, 54, 56, 60) de l'unité de commande de gaz (16) sont disposés dans un bloc de soupape commun.

11. Unité de commande de gaz (16) selon l'une des revendications précédentes, **caractérisée en ce que** l'unité de chambre de détection (12) comprend une chambre sous vide constituée comme chambre de détection (18) sous la forme d'une chambre de détection rigide ou sous la forme d'une chambre à feuille flexible.

12. Unité de commande de gaz (16) selon l'une des revendications précédentes, **caractérisée en ce qu'**est prévu un module de pompe auxiliaire pouvant être relié à l'unité de commande de gaz (16), pour augmenter la performance de la pompe de l'unité de commande de gaz (16).

13. Système de détection de fuite à vide (10) comprenant :
une unité de commande de gaz (16) selon l'une des revendications précédentes,
une unité de chambre de détection (12) avec une chambre de détection de vide (18) et une unité de détection de gaz (14),
la chambre de détection de vide (18) comprenant une entrée de gaz de chambre de détection (20) reliée et une sortie de gaz de chambre de détection (22) reliée,
l'unité de détection de gaz (14) comprenant une entrée de détection de gaz (32) et une sortie de gaz de détection de gaz (34), et
l'unité de commande de gaz (16) étant reliée à l'unité de chambre de détection (12) et à l'unité de détection de gaz (14).

14. Procédé de détection de fuite de gaz avec une unité de commande de gaz (16) selon l'une des revendications 1 à 12 avec les étapes suivantes :
• évacuation de la chambre de détection de vide (18) de l'unité de chambre de détection (12) à l'aide de la pompe à vide (58) de l'unité de commande de gaz (16) par un conduit de gaz (54, 60, 56) reliant la première entrée de gaz (36) à la pompe à vide (58) et la pompe à vide (58) à la troisième sortie de gaz (46),
• blocage de la branche de liaison (60) reliant la première entrée (36) à la pompe à vide (58) et ouverture du conduit de gaz (54) reliant la première entrée de gaz (36) à la deuxième sortie de gaz (40) et du conduit de gaz (56) reliant la deuxième entrée de gaz (42) à la pompe à vide (58), pendant qu'un conduit de gaz (48) reliant la troisième entrée de gaz (44) à la première sortie de gaz (38) est également ouvert pour acheminer un gaz porteur à la chambre de détection de vide (18) à travers la troisième entrée de gaz (44) et pour acheminer le mélange composé de gaz porteur et d'éventuelle fuite de gaz à l'unité de détection de gaz (14).

15. Procédé selon la revendication précédente, **caractérisé par** l'étape supplémentaire :
• rinçage de l'unité de chambre de détection (12) et/ou de l'unité de détection de gaz (14) avec du gaz aspiré à travers la troisième entrée de gaz (44) provenant de l'atmosphère entourant l'unité de commande de gaz (16).

16. Procédé selon la revendication 14 ou 15, **caractérisé en ce que** le conduit de gaz (54) reliant la première entrée (36) à la deuxième sortie (40) et le conduit de gaz (56) reliant la deuxième entrée (42) à la troisième sortie de gaz (46) sont l'un et l'autre fermés pendant que la chambre de détection de vide (18) est évacuée par la pompe à vide (58) de l'unité de commande de gaz (16).
